(19) Europäisches Patentamt
European Patent Office
Office européen des brevets

(11) **EP 4 362 261 A1**

(12) **EUROPEAN PATENT APPLICATION**
published in accordance with Art. 153(4) EPC

(43) Date of publication:
**01.05.2024 Bulletin 2024/18**

(51) International Patent Classification (IPC):
***H02J 3/16*** (2006.01)     ***H02J 3/18*** (2006.01)

(21) Application number: **22848484.6**

(52) Cooperative Patent Classification (CPC):
**H02J 3/16; H02J 3/18; H02J 3/36; H02J 3/40;**
**H02J 3/50; H02M 1/00; H02M 1/32; H02M 7/797;**
**Y02E 60/60**

(22) Date of filing: **25.07.2022**

(86) International application number:
**PCT/CN2022/107634**

(87) International publication number:
**WO 2023/005879 (02.02.2023 Gazette 2023/05)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **27.07.2021 CN 202110850245**

(71) Applicants:
• **NR Electric Co., Ltd**
  **Nanjing, Jiangsu 211102 (CN)**
• **NR Engineering Co., Ltd.**
  **Nanjing, Jiangsu 211102 (CN)**
• **NR Electric Power Electronics Co., Ltd.**
  **Changzhou, Jiangsu 213025 (CN)**

(72) Inventors:
• **WANG, Nannan**
  **Nanjing, Jiangsu 211102 (CN)**
• **TIAN, Jie**
  **Nanjing, Jiangsu 211102 (CN)**

• **LU, Yu**
  **Nanjing, Jiangsu 211102 (CN)**
• **DONG, Yunlong**
  **Nanjing, Jiangsu 211102 (CN)**
• **ZHAN, Changjiang**
  **Nanjing, Jiangsu 211102 (CN)**
• **LI, Haiying**
  **Nanjing, Jiangsu 211102 (CN)**
• **WANG, Xinbao**
  **Nanjing, Jiangsu 211102 (CN)**
• **ZOU, Kaikai**
  **Nanjing, Jiangsu 211102 (CN)**
• **WANG, Xianrong**
  **Nanjing, Jiangsu 211102 (CN)**
• **YIN, Zihan**
  **Nanjing, Jiangsu 211102 (CN)**
• **MA, Xiuda**
  **Nanjing, Jiangsu 211102 (CN)**

(74) Representative: **Grünecker Patent- und**
**Rechtsanwälte**
**PartG mbB**
**Leopoldstraße 4**
**80802 München (DE)**

(54) **CONVERTER CONTROL METHOD AND CONTROL SYSTEM, COMPUTER DEVICE, AND STORAGE MEDIUM**

(57)     This application provides a control method and a control system for a converter, and a computer device, applied to a flexible direct-current power transmission system. The flexible direct-current power transmission system includes one or more voltage source converters, and the control method includes: determining an inner potential of the converter, a phase, a grid-side voltage, a grid-side current of the converter, a constant impedance value, and a current limiting value of the converter; calculating a voltage reference value of a connection bus of the converter according to the inner potential, the phase, the constant impedance value, and the grid-side current of the converter; calculating a current instruction reference value according to an error between the voltage reference value of the connection bus and the grid-side voltage; and controlling, according to the current instruction reference value, a current of the converter to follow the current instruction reference value. The control method further includes an overcurrent limiting unit, and when the converter is in an instruction current-limiting mode, a current instruction reference value in the instruction current-limiting mode is calculated according to series inductance characteristics of a positive sequence voltage source and according to the grid-side

voltage $U_s$, the inner potential amplitude E, the phase $\theta$, and the current limiting value $I_{max}$ of the converter, and is used as the current instruction reference value.

| Determine an initial value of a control system | $\sim$ S201 |

$\downarrow$

| Calculate a voltage reference value | $\sim$ S203 |

$\downarrow$

| Calculate a current instruction reference value | $\sim$ S205 |

$\downarrow$

| Control a current of the converter to follow the current instruction reference value | $\sim$ S207 |

FIG. 2

**Description**

**CROSS-REFERENCE TO RELATED APPLICATIONS**

This application claims priority to Chinese Patent Application No. 2021108502453, filed with the China National Intellectual Property Administration on July 27, 2021 and entitled "CONTROL METHOD AND CONTROL SYSTEM FOR CONVERTER", which is incorporated herein by reference in its entirety.

**TECHNICAL FIELD**

This application relates to the field of flexible direct-current power transmission systems of power systems, and specifically, to a control method and a control system for a converter, a computer device, and a storage medium.

**BACKGROUND**

With continuous increases in the electric energy yield, the proportion, and the utilization level of new energy, asynchronous generator power sources such as the new energy account for a very high proportion in a grid. As a result, running characteristics of power systems have essential changes.

With an increase in the power generation penetration rate of the new energy, characteristics of power electronics converters such as low inertia and non-damping adversely affect stable running of the system, and consequently bring a challenge to stable running of the grid. Currently, the power system still cannot support access from a large-scale new energy power source.

In a novel power system where a new energy power source dominates, because the investment proportion of synchronous generators is reduced, inertia of the synchronous generators is insufficient to ensure a same frequency between all synchronous generator power sources and asynchronous generator power sources in the entire grid, and there is a problem of power stability.

The flexible direct-current power transmission technology has advantages of being flexible in control and being large in controllable range, and can effectively implement wide-range new energy grid connection, to ensure efficient aggregation and flexible transmission of new energy.

Currently, in the flexible direct-current power transmission technology, control over converters is mainly divided into two types: grid following control and grid forming control. External characteristics of a power source of a converter of the grid following control are represented by current source characteristics. Typical representatives include a conventional grid commutation converter, a doubly-fed induction generator, and a voltage source converter with direct current control. External characteristics of a power source of a converter of the grid forming control are represented by voltage source characteristics. Typical representatives include a voltage source converter with amplitude-phase control (or referred to as indirect current control) or power synchronization control (including virtual synchronous generator control). The grid forming control improves output characteristics of the converter with reference to the running principle of the conventional synchronous generator. Typical grid forming control is a virtual synchronous generator (VSG, virtual synchronous generator) technology.

The converter in the flexible direct-current power transmission technology is weak in overcurrent capability in a fault. Therefore, when the grid has a fault, it is necessary to perform current-limiting control regardless of being the grid following control or the grid forming control, to prevent a short-circuit current from burning out a switching device.

Currently, regular overcurrent limiting manners include three types: equal-proportion limiting of the axis-d and axis-q currents, prioritized limiting of the axis-d current, and prioritized limiting of the axis-q current. When the foregoing current-limiting solution is used, the converter becomes a current source, and is incapable of having the characteristics of the virtual synchronous generator. To enable the converter to maintain voltage source characteristics similar to those of the synchronous generator in each of a stable state and a fault is one of to-be-resolved problems of flexibly direct-current accessing the novel power system where new energy dominates.

**SUMMARY**

Exemplary embodiments of this application provide a control method and a control system for a converter, a computer device, and a storage medium, to avoid a problem in a conventional current-limiting method that a converter is caused to enter a current source and consequently control characteristics are insufficient.

According to an aspect of this application, a control method for a converter is provided, where the control method is applied to a flexible direct-current power transmission system, the flexible direct-current power transmission system includes one or more voltage source converters, and the control method includes:

step 1: determining an inner potential amplitude E of the converter, a phase $\theta$ of the inner potential, a grid-side voltage $U_s$, a grid-side current $I_s$ of the converter, a constant impedance value $X_{Lset}$, and a current limiting value $I_{max}$ of the converter;

step 2: calculating a voltage reference value $U_{sref}$ of a connection bus of the converter according to the inner potential amplitude E, the phase $\theta$, the constant impedance value $X_{Lset}$, and the grid-side current $I_s$ of the converter;

step 3: calculating a current instruction reference value $I_{sref}$ according to an error between the voltage reference value $U_{sref}$ of the connection bus and the grid-side voltage $U_s$; and

step 4: controlling, according to the current instruction reference value $I_{sref}$, a current of the converter to follow the current instruction reference value $I_{sref}$,

where the control method further includes an overcurrent limiting unit, and when the converter is in an instruction current-limiting mode, a current instruction reference value in the instruction current-limiting mode is calculated according to series inductance characteristics of a positive sequence voltage source and according to the grid-side voltage $U_s$, the inner potential amplitude E, the phase $\theta$, and the current limiting value $I_{max}$ of the converter, and is used as the current instruction reference value $I_{sref}$ in the step 3.

In an embodiment, a value of an amplitude of the inner potential of the converter ranges from 0 pu to 2 pu; and

a rotor motion equation of a virtual synchronous generator of the phase $\theta$ is:

$$\begin{cases} \dfrac{d\theta}{dt} = \omega \\ J\dfrac{d\omega}{dt} = \dfrac{P_m}{\omega} - \dfrac{P_e}{\omega} - D(\omega - \omega_0) \end{cases},$$

where $P_m$ is mechanical power, $P_e$ is electromagnetic power, J is virtual inertia, D is a virtual damping factor, $\omega$ is a rotor angular frequency of the virtual synchronous generator, and $\omega_0$ is a system rated rotor angular frequency.

In an embodiment, the amplitude of the inner potential of the converter is obtained by performing calculation according to determined function relationships such as droop characteristics and based on a terminal voltage or reactive power.

In an embodiment, the voltage reference value $U_{sref}$ includes a positive sequence axis-d component $U_{srefdp}$, a positive sequence axis-q component $U_{srefqp}$, a negative sequence axis-d component $U_{srefdn}$, and a negative sequence axis-q component $U_{srefqn}$, and satisfies:

$$U_{srefdp} + j\, U_{srefqp} = E - jX_{Lset}(I_{sdp} + jI_{sqp})$$

$$U_{srefdn} + j\, U_{srefqn} = jX_{Lset}(I_{sdn} + jI_{sqn})$$

where $I_{sdp}$ is a positive sequence axis-d component of the grid-side current $I_s$ of the converter, $I_{sqp}$ is a positive sequence axis-q component of the grid-side current $I_s$ of the converter, $I_{sdn}$ is a negative sequence axis-d component of the grid-side current $I_s$ of the converter, and $I_{sqn}$ is a negative sequence axis-q component of the grid-side current $I_s$ of the converter.

In an embodiment, the control method further includes:

when an amplitude of the current instruction reference value $I_{sref}$ calculated in the step 3 is greater than the current limiting value $I_{max}$, namely, the following formula is satisfied, the converter is in the instruction current-limiting mode:

$$\sqrt{I_{srefdp}^2 + I_{srefqp}^2} + \sqrt{I_{srefdn}^2 + I_{srefqn}^2} > I_{max}$$

where $I_{srefdp}$ is a current positive sequence axis-d reference value of the current instruction reference value $I_{sref}$, $I_{srefqp}$ is a current positive sequence axis-q reference value of the current instruction reference value $I_{sref}$, $I_{srefdn}$ is a current negative sequence axis-d reference value of the current instruction reference value $I_{sref}$, and $I_{srefqn}$ is a current negative sequence axis-q reference value of the current instruction reference value $I_{sref}$.

In an embodiment, the control method further includes: when an actual current is greater than the current limiting value $I_{max}$, the converter is in the instruction current-limiting mode.

In an embodiment, the step of calculating the current instruction reference value in the instruction current-limiting mode according to the series inductance characteristics of the positive sequence voltage source includes:

performing Park transformation on the grid-side voltage $U_s$ according to the phase $\theta$, to calculate a voltage vector including a positive sequence axis-d component $U_{sdp}$ of the grid-side voltage $U_s$, a positive sequence axis-q component $U_{sqp}$ of the grid-side voltage $U_s$, a negative sequence axis-d component $U_{sdn}$ of the grid-side voltage $U_s$, and a negative sequence axis-q component $U_{sqn}$ of the grid-side voltage $U_s$;

calculating a current-limiting impedance $X_L$ in the instruction current-limiting mode according to the current limiting value $I_{max}$; and

calculating, based on the series inductance characteristics of the positive sequence voltage source, the current instruction reference value $I_{sref}$ after instruction limiting according to the voltage vector of the grid-side voltage $U_s$, the inner potential amplitude E, and the current-limiting impedance $X_L$, where the current instruction reference value $I_{sref}$ includes a current positive sequence axis-d reference value $I_{srefdp}$, a current positive sequence axis-q reference value $I_{srefqp}$, a current negative sequence axis-d reference value $I_{srefdn}$, and a current negative sequence axis-q reference value $I_{srefqn}$.

In an embodiment, when the converter is in the instruction current-limiting mode, the constant impedance value $X_{Lset}$ is the current-limiting impedance $X_L$; and
when the converter is not in the instruction current-limiting mode, the constant impedance value $X_{Lset}$ ranges from 0 pu to 5 pu.

In an embodiment, the step of calculating the current-limiting impedance $X_L$ in the instruction current-limiting mode according to the current limiting value $I_{max}$ includes:
calculating a voltage vector of the current-limiting impedance $X_L$ according to a vector difference between the grid-side voltage $U_s$ and the inner potential amplitude E, and then obtaining the current-limiting impedance $X_L$ by dividing a modulus of the voltage vector by the current limiting value $I_{max}$ of the converter.

In an embodiment, when the current-limiting impedance $X_L$ is greater than the constant impedance value $X_{Lset}$, it is determined that the converter is in the instruction current-limiting mode.

In an embodiment, the step of calculating the current instruction reference value $I_{sref}$ according to the error between the voltage reference value $U_{sref}$ of the connection bus and the grid-side voltage $U_s$ includes:
using a PI controller in the step 3, where input is the error between the voltage reference value $U_{sref}$ of the connection bus and the grid-side voltage $U_s$, output is the current instruction reference value $I_{sref}$, and when the converter is in the instruction current-limiting mode, the current instruction reference value $I_{sref}$ is the current instruction reference value that is output in the overcurrent limiting unit.

In an embodiment, a PI controller is used in the step 3, a reference voltage instruction is obtained using the current instruction reference value $I_{sref}$ and the grid-side current $I_s$ of the converter, inverse Park transformation is performed on the reference voltage instruction to obtain a three-phase reference voltage instruction $U_{Cabc}$, and the three-phase reference voltage instruction $U_{Cabc}$ is sent to a subsequent converter valve control link to control the converter.

According to an aspect of this application, a control method for a converter is provided, where the control method is applied to a flexible direct-current power transmission system, the flexible direct-current power transmission system includes one or more voltage source converters, and the control method includes:

determining an inner potential amplitude E of the converter, a phase $\theta$ of the inner potential, a grid-side voltage $U_s$, a grid-side current $I_s$ of the converter, a constant impedance value $X_{Lset}$, and a current limiting value $I_{max}$ of the converter;

calculating a current instruction reference value $I_{sref}$ in an instruction current-limiting mode according to series inductance characteristics of a positive sequence voltage source and according to the grid-side voltage $U_s$, the inner potential amplitude E, the phase $\theta$, and the current limiting value $I_{max}$; and

controlling, according to the current instruction reference value $I_{sref}$, a current of the converter to follow the current instruction reference value $I_{sref}$.

In an embodiment, a value of an amplitude of the inner potential of the converter ranges from 0 pu to 2 pu, and a rotor motion equation of a virtual synchronous generator of the phase $\theta$ is:

$$\begin{cases} \dfrac{d\theta}{dt} = \omega \\ J\dfrac{d\omega}{dt} = \dfrac{P_{\mathrm{m}}}{\omega} - \dfrac{P_e}{\omega} - D(\omega - \omega_0) \end{cases}$$

where $P_{\mathrm{m}}$ is mechanical power, $P_e$ is electromagnetic power, $J$ is virtual inertia, $D$ is a virtual damping factor, $\omega$ is a rotor angular frequency of the virtual synchronous generator, and $\omega_0$ is a system rated rotor angular frequency.

In an embodiment, the amplitude of the inner potential of the converter is obtained by performing calculation according to determined function relationships such as droop characteristics and based on a terminal voltage or reactive power.

In an embodiment, the step of calculating the current instruction reference value $I_{sref}$ in the instruction current-limiting mode according to the series inductance characteristics of the positive sequence voltage source includes:

performing Park transformation on the grid-side voltage $U_s$ according to the phase $\theta$, to calculate a voltage vector including a positive sequence axis-d component $U_{sdp}$ of the grid-side voltage $U_s$, a positive sequence axis-q component $U_{sqp}$ of the grid-side voltage $U_s$, a negative sequence axis-d component $U_{sdn}$ of the grid-side voltage $U_s$, and a negative sequence axis-q component $U_{sqn}$ of the grid-side voltage $U_s$;

calculating a current-limiting impedance $X_L$ in the instruction current-limiting mode according to the current limiting value $I_{max}$; and

calculating, based on the series inductance characteristics of the positive sequence voltage source, the current instruction reference value $I_{sref}$ after instruction limiting according to the voltage vector of the grid-side voltage $U_s$, the inner potential amplitude E, and the current-limiting impedance $X_L$, where the current instruction reference value $I_{sref}$ includes a current positive sequence axis-d reference value $I_{srefdp}$, a current positive sequence axis-q reference value $I_{srefqp}$, a current negative sequence axis-d reference value $I_{srefdn}$, and a current negative sequence axis-q reference value $I_{srefqn}$.

In an embodiment, calculating a voltage vector of the current-limiting impedance $X_L$ according to a vector difference between the grid-side voltage $U_s$ and the inner potential amplitude E, and then obtaining the current-limiting impedance $X_L$ by dividing a modulus of the voltage vector by the current limiting value $I_{max}$ of the converter.

According to an aspect of this application, a control system for a converter is provided, where

the control system includes a system parameter obtaining module, a reference voltage generation module, a voltage outer-loop module, a current inner-loop module, and an overcurrent limiting module, where

the system parameter obtaining module is configured to obtain an inner potential amplitude E of the converter, a phase $\theta$ of the inner potential, a constant impedance value $X_{Lset}$, a grid-side voltage $U_s$, a grid-side current $I_s$ of the converter, and a current limiting value $I_{max}$, where a value of an amplitude of the inner potential amplitude E ranges from 0 pu to 2 pu, and a rotor motion equation of a virtual synchronous generator of the phase $\theta$ is:

$$\begin{cases} \dfrac{d\theta}{dt} = \omega \\ J\dfrac{d\omega}{dt} = \dfrac{P_{\mathrm{m}}}{\omega} - \dfrac{P_e}{\omega} - D(\omega - \omega_0) \end{cases}$$

the reference voltage generation module is configured to calculate a voltage reference value $U_{sref}$ of a connection bus of the converter according to the inner potential amplitude E, the phase $\theta$, the constant impedance value $X_{Lset}$, and the grid-side current $I_s$ of the converter;

the voltage outer-loop module is configured to calculate a current instruction reference value $I_{sref}$ according to an error between the voltage reference value $U_{sref}$ of the connection bus and the collected grid-side voltage $U_s$;

the current inner-loop module is configured to control, according to the current instruction reference value $I_{sref}$, a current of the converter to follow the current instruction reference value $I_{sref}$, and

the overcurrent limiting module is configured to calculate, when the current instruction reference value $I_{sref}$ of the converter is greater than the current limiting value $I_{max}$ or an actual current is greater than the current limiting value $I_{max}$ of the converter, a current instruction reference value $I_{sref}$ in an instruction current-limiting mode according to the collected grid-side voltage $U_s$, the inner potential amplitude E, the phase $\theta$, and the current limiting value $I_{max}$

of the converter and according to the series inductance characteristics of the positive sequence voltage source, where the current instruction reference value $I_{sref}$ is used as input of the current inner-loop module.

According to an aspect of this application, a computer device is provided, including a memory, a processor, and a computer program stored in the memory and executable on the processor, where when the processor executes the computer program, the steps in the control method described above are implemented.

According to another aspect of this application, a computer-readable storage medium is provided, storing a computer program, where when the computer program is executed by a processor, the steps in the method described above are implemented.

The converter in the flexible direct-current power transmission technology is weak in overcurrent capability in a fault. Therefore, when the grid has a fault, it is necessary to perform current-limiting control regardless of being the grid following control or the grid forming control, to prevent a short-circuit current from burning out a switching device.

Currently, regular overcurrent limiting manners include three types: equal-proportion limiting of the axis-d and axis-q currents, prioritized limiting of the axis-d current, and prioritized limiting of the axis-q current.

The inventor finds that, when the foregoing current-limiting solution is used, the converter becomes a current source, and is incapable of having the characteristics of the virtual synchronous generator. Therefore, to enable the converter to maintain voltage source characteristics similar to those of the synchronous generator in each of a stable state and a fault is one of to-be-resolved problems of flexibly direct-current accessing the novel power system where new energy dominates.

A control method and a control system for a converter, a computer device, and a storage medium in which current limiting is performed according to series inductance characteristics of a positive sequence voltage source are provided according to exemplary embodiments of this application, to avoid a problem in a conventional current-limiting method that a converter is caused to enter a current source and consequently control characteristics are insufficient. In addition, external characteristics of the control system for a converter provided according to some embodiments of this application in stable and transient whole processes are series controlled inductance characteristics of the positive sequence voltage source, thereby providing inertia support for the grid consistent with that for the synchronous generator in a fault. In addition, when the alternating-current system has a fault, a capacitive reactive current may be injected into a fault point, to facilitate an increase in protection of action sensitivity.

## BRIEF DESCRIPTION OF THE DRAWINGS

To describe the technical solutions of the embodiments of this application or the related art more clearly, the following briefly introduces the accompanying drawings required for describing the embodiments or the related art. Apparently, the accompanying drawings in the following description show only some embodiments of this application, and a person of ordinary skill in the art may still derive other accompanying drawings from these accompanying drawings without creative efforts.

FIG. 1 is a schematic diagram of a relationship between modules of a control system for a converter according to an embodiment of this application.
FIG. 2 is a flowchart of a control method for a converter according to an embodiment of this application.
FIG. 3 is a block diagram of generating a phase θ of an inner potential of a converter according to an embodiment of this application.
FIG. 4 is a flowchart of a control method for a converter according to an embodiment of this application.
FIG. 5 is a block diagram of a control system for a converter according to an embodiment of this application.
FIG. 6 shows a control system for a converter according to an embodiment of this application.
FIG. 7 is a diagram of an internal structure of a computer device according to an embodiment of this application.
FIG. 8 is a diagram of an equivalent circuit of controlling a converter with a control method for a converter according to an embodiment of this application.
FIG. 9 is a diagram of a fault ride-through effect of a control method for a converter according to an embodiment of this application.

## DETAILED DESCRIPTION

Exemplary embodiments will be described more comprehensively with reference to the accompanying drawings. However, the exemplary embodiments can be implemented in a plurality of forms, and it should not be understood as being limited to the embodiments described herein. Conversely, the embodiments are provided to make this application more comprehensive and complete, and comprehensively convey the idea of the examples of the embodiments to a person skilled in the art. A same reference numeral in the accompanying drawings represents same or similar components, and therefore repeated descriptions of the components are appropriately omitted.

The described features, structures, or characteristics may be combined in one or more embodiments in any appropriate manner. In the following descriptions, a lot of specific details are provided to give a full understanding of the embodiments of this application. However, a person of skill in the art should be aware that, the technical solutions in the present disclosure may be implemented without one or more of the particular details, or another manner, element, material, apparatus, operation, or the like may be used. In the cases, well-known structures, methods, apparatuses, implementations, materials, or operations are not shown or described in detail.

The flowcharts shown in the accompanying drawings are merely examples for descriptions, do not necessarily include all content and operations/steps, and are not necessarily performed in the described orders. For example, some operations/steps may be further divided, while some operations/steps may be combined or partially combined. Therefore, an actual execution order may vary depending on an actual situation.

In the specification, claims, and accompanying drawings of this application, the terms "first", "second", and so on are intended to distinguish between different objects but do not indicate a particular order. In addition, terms "include" and "have" and any variation thereof are intended to cover non-exclusive including. For example, a process, a method, a system, a product, or a device that includes a series of steps or units is not limited to the listed steps or units, but optionally further includes an unlisted step or unit, or optionally further includes another inherent step or unit of the process, the method, the product, or the device.

The pu in this application refers to the unit of a per-unit value in a per-unit system (per-unit system).

The following describes specific embodiments of this application in detail with reference to the accompanying drawings.

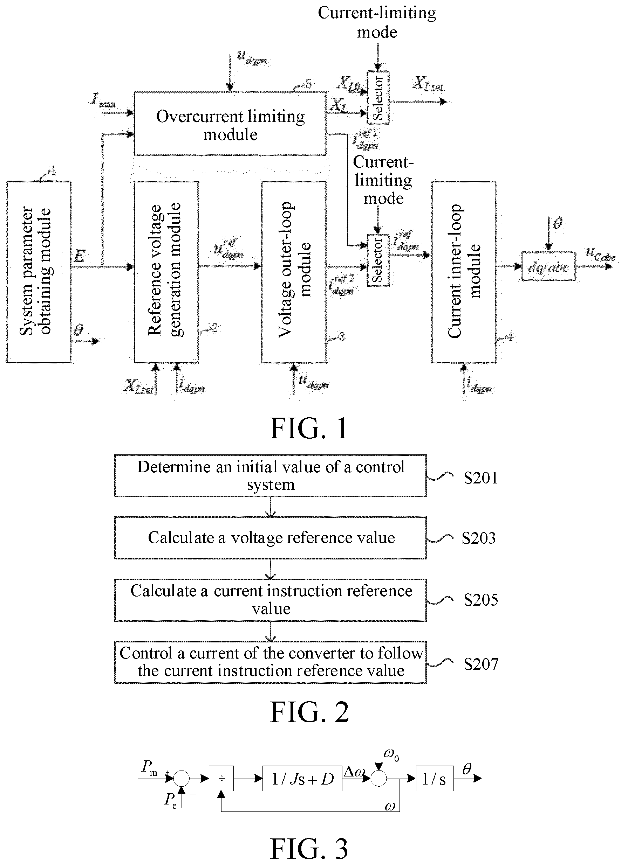

FIG. 1 is a schematic diagram of a relationship between modules of a control system for a converter according to an exemplary embodiment of this application.

A relationship between modules of a control system for a converter according to an exemplary embodiment of this application is described in detail below with reference to FIG. 1.

FIG. 1 shows a control system for a converter according to an exemplary embodiment of this application, including a system parameter obtaining module 1, a reference voltage generation module 2, a voltage outer-loop module 3, a current inner-loop module 4, and an overcurrent limiting module 5.

In FIG. 1, $u_{dqpn}$ used is in the form of a vector including a positive sequence axis-d component $U_{sdp}$, a positive sequence axis-q component $U_{sqp}$, a negative sequence axis-d component $U_{sdn}$, and a negative sequence axis-q component $U_{sqn}$ of a grid-side voltage $U_s$, and $i_{dqpn}$ used is in the form of a vector including a positive sequence axis-d component $I_{sdp}$, a positive sequence axis-q component $I_{sqp}$, a negative sequence axis-d component $I_{sdn}$, and a negative sequence axis-q component $I_{sqn}$ of a grid-side current $I_s$ of the converter, namely:

$$\begin{cases} u_{dqpn} = [\mathrm{U}_{sdp}, \mathrm{U}_{sqp}, \mathrm{U}_{sdn}, \mathrm{U}_{sqn}] \\ i_{dqpn} = [I_{sdp}, I_{sqp}, I_{sdn}, I_{sqn}] \end{cases} \quad (1).$$

The grid-side current $I_s$ of the converter refers to a current on an alternating-current side (namely, three-phase grid-side) of the converter.

In Formula (1), the collected three-phase grid-side voltage $u_s$ of the converter undergoes sequence decomposition and park (abc/dq) transformation (Park Transformation) to obtain the positive sequence axis-d component $U_{sdp}$ of the grid-side voltage, the positive sequence axis-q component $U_{sqp}$ of the grid-side voltage, the negative sequence axis-d component $U_{sdn}$ of the grid-side voltage, and the negative sequence axis-q component $U_{sqn}$ of the grid-side voltage. Similarly, the collected three-phase grid-side current $I_s$ of the converter undergoes sequence decomposition and park (abc/dq) transformation to obtain the positive sequence axis-d component $I_{sdp}$ of the alternating-current current, the positive sequence axis-q component $I_{sqp}$ of the alternating-current current, the negative sequence axis-d component $I_{sdn}$ of the alternating-current current, and the negative sequence axis-q component $I_{sqn}$ of the alternating-current current.

A value of an amplitude E of the inner potential of the system parameter obtaining module 1 ranges from 0 pu to 2 pu, and optionally is 1 pu. The amplitude E of the inner potential may alternatively be obtained by performing calculation according to determined function relationships such as droop characteristics and based on a terminal voltage or reactive power.

A rotor motion equation of a virtual synchronous generator of a phase θ of the inner potential is shown in Formula (2).

$$\begin{cases} \dfrac{d\theta}{dt} = \omega \\[2ex] J\dfrac{d\omega}{dt} = \dfrac{P_m}{\omega} - \dfrac{P_e}{\omega} - D(\omega - \omega_0) \end{cases} \qquad (2)$$

where $P_m$ is mechanical power, $P_e$ is electromagnetic power, J is virtual inertia, D is a virtual damping factor, $\omega$ is a rotor angular frequency of the virtual synchronous generator, and $\omega_0$ is a system rated rotor angular frequency.

The overcurrent limiting module 5 is configured to calculate a current instruction reference value when the converter is in an instruction current-limiting mode.

Input of the overcurrent limiting module 5 is the inner potential amplitude E, a current limiting value $I_{max}$ of the converter, and the grid-side voltage $u_{dqpn}$. According to a circuit principle, a current-limiting impedance $X_L$ less than the current limiting value $I_{max}$ of the converter may be obtained through calculation. Subsequently, the current instruction reference value $i_{dqpn}^{ref1}$ after instruction limiting may be calculated according to series inductance characteristics of a positive sequence voltage source and according to the inner potential amplitude E, the grid-side voltage $u_{dqpn}$, and the current-limiting impedance $X_L$.

When the converter is in the instruction current-limiting mode, the constant impedance value $X_{Lset}$ is the current-limiting impedance $X_L$. When the converter is not in the instruction current-limiting mode, $X_{Lset}$ is equal to a constant value $X_{L0}$ determined according to system research. The constant value $X_{L0}$ ranges from 0 pu to 5 pu. For example, the constant impedance value $X_{Lset}$ is 0.1 pu.

The reference voltage generation module 2 is configured to calculate a voltage reference value $u_{dqpn}^{ref}$ of a connection bus of the converter.

Input of the reference voltage generation module 2 is the inner potential amplitude E, the constant impedance value $X_{Lset}$, and the sampling current $i_{dqpn}$. The voltage reference value $u_{dqpn}^{ref}$ of the connection bus of the converter satisfying the series inductance characteristics of the positive sequence voltage source is calculated according to Formula (3). $u_{dqpn}^{ref}$ is a four-dimensional vector $[U_{srefdp}, U_{srefqp}, U_{srefdn}, U_{srefqn}]$ and corresponds to $u_{dqpn}$.

The voltage outer-loop module 3 is configured to calculate a current instruction reference value when the converter is not in the instruction current-limiting mode.

The voltage outer-loop module 3 generates, according to a deviation between $u_{dqpn}^{ref}$ and $u_{dqpn}$, a current instruction reference value $i_{dqpn}^{ref2}$ satisfying the series inductance characteristics of the positive sequence voltage source in a non-current-limiting case. The voltage outer-loop module 3 may be a PI controller.

A final current instruction reference value is determined according to whether the converter is in the instruction current-limiting mode. To be specific, when the converter is in the instruction current-limiting mode, the current instruction reference value $i_{dqpn}^{ref}$ is $i_{dqpn}^{ref1}$ that is output by the overcurrent limiting module 5. When the converter is not in the instruction current-limiting mode, the current instruction reference value is $i_{dqpn}^{ref2}$ that is output by the voltage outer-loop module 3. In addition, when the converter is in the instruction current-limiting mode, controller amplitude limiting needs to be further performed using $i_{dqpn}^{ref1}$.

The current inner-loop module 4 is configured to obtain a reference voltage instruction.

The current inner-loop module 4 obtains the reference voltage instruction according to a deviation between the current instruction reference value $i_{dqpn}^{ref}$ and the sampling current $i_{dqpn}$.

With the PI controller, the reference voltage instruction that is output by the current inner-loop module 4 undergoes inverse Park (dq/abc) transformation to obtain a three-phase reference voltage instruction $U_{Cabc}$, and $U_{Cabc}$ is sent to a subsequent converter valve control link to control the converter.

FIG. 2 is a flowchart of a control method for a converter according to an exemplary embodiment of this application. A control method for a converter according to an exemplary embodiment of this application is described below with reference to FIG. 2.

In an embodiment, the control method shown in FIG. 2 is applied to a flexible direct-current power transmission system, and the flexible direct-current power transmission system includes one or more voltage source converters.

Step S201: Determine an inner potential amplitude E of the converter, a phase $\theta$ of the inner potential, a grid-side voltage $U_s$, a grid-side current $I_s$ of the converter, a constant impedance value $X_{Lset}$, and a current limiting value $I_{max}$ of the converter.

In an embodiment, a value of the inner potential amplitude E of the converter ranges from 0 pu to 2 pu. For example, a value of the inner potential amplitude E of the converter is 1 pu. In an embodiment, the value of E may alternatively be adjusted by adding an exciter similar to a synchronous generator or a reactive regulation policy.

In an embodiment, a rotor motion equation of a virtual synchronous generator of a phase $\theta$ of the inner potential of the converter is shown in Formula (2).

In an embodiment, the constant impedance value $X_{Lset}$ ranges from 0 pu to 5 pu. For example, the constant impedance value $X_{Lset}$ is 0.1 pu.

FIG. 3 is a block diagram of generating a phase $\theta$ of an inner potential amplitude E of a converter according to an exemplary embodiment of this application. Input $P_m$ is mechanical power, and is equivalent to an active power instruction value for the converter. Input $P_e$ is electromagnetic power, and is active power obtained by collecting terminal voltage and current of the converter and performing calculation, J is virtual inertia, D is a virtual damping factor, $\theta$ is the phase of the inner potential of the converter, $\omega$ is a rotor angular frequency of a virtual synchronous generator, and $\omega_0$ is a system rated rotor angular frequency. The virtual inertia J and the virtual damping factor D are determined according to system research.

Step S203: Calculate a voltage reference value $U_{sref}$ of a connection bus of the converter according to the inner potential amplitude E, the phase $\theta$, the constant impedance value $X_{Lset}$, and the grid-side current $I_s$ of the converter.

In an embodiment, the voltage reference value $U_{sref}$ includes a positive sequence axis-d component $U_{srefdp}$, a positive sequence axis-q component $U_{srefqp}$, a negative sequence axis-d component $U_{srefdn}$, and a negative sequence axis-q component $U_{srefqn}$, and satisfies Formula (3).

$$U_{srefdp} + \text{j}\, U_{srefqp} = E - jX_{Lset}(I_{sdp} + \text{j}I_{sqp})$$
$$U_{srefdn} + \text{j}\, U_{srefqn} = jX_{Lset}(I_{sdn} + \text{j}I_{sqn}) \tag{3}$$

where $I_{sdp}$ is a positive sequence axis-d component of the grid-side current $I_s$ of the converter, $I_{sqp}$ is a positive sequence axis-q component of the grid-side current $I_s$ of the converter, $I_{sdn}$ is a negative sequence axis-d component of the grid-side current $I_s$ of the converter, and $I_{sqn}$ is a negative sequence axis-q component of the grid-side current $I_s$ of the converter.

Step S205: Calculate a current instruction reference value $I_{sref}$ according to an error between the voltage reference value $U_{sref}$ of the connection bus and the grid-side voltage $U_s$.

In an embodiment, the current instruction reference value $I_{sref}$ includes a current positive sequence axis-d reference value $I_{srefdp}$, a current positive sequence axis-q reference value $I_{srefqp}$, a current negative sequence axis-d reference value $I_{srefdn}$, and a current negative sequence axis-q reference value $I_{srefqn}$.

According to some embodiments of this application, when the converter is not in the instruction current-limiting mode, the current instruction reference value $I_{sref}$ is obtained with a PI controller and according to the error between the voltage reference value $U_{sref}$ of the connection bus and the grid-side voltage $U_s$.

According to some embodiments of this application, when the converter is in the instruction current-limiting mode, a current-limiting impedance $X_L$ for implementing current limiting is first calculated. The current instruction reference value $I_{sref}$ after instruction limiting is calculated according to the series inductance characteristics of the positive sequence voltage source.

In an embodiment, when the converter is in the instruction current-limiting mode, Park transformation is performed on the grid-side voltage $U_s$ according to the phase $\theta$, and a positive sequence axis-d component $U_{sdp}$ of the grid-side voltage $U_s$, a positive sequence axis-q component $U_{sqp}$ of the grid-side voltage $U_s$, a negative sequence axis-d component $U_{sdn}$ of the grid-side voltage $U_s$, and a negative sequence axis-q component $U_{sqn}$ of the grid-side voltage $U_s$ are calculated. A voltage vector of the current-limiting impedance $X_L$ is calculated according to a vector difference between the grid-side voltage $U_s$ and the inner potential amplitude E, and then the current-limiting impedance $X_L$ is obtained by dividing a modulus of the voltage vector by the current limiting value $I_{max}$ of the converter.

In an embodiment, when the converter is in the instruction current-limiting mode, a current vector on the current-limiting impedance $X_L$ is calculated according to the voltage vector of the current-limiting impedance $X_L$ and the current-limiting impedance $X_L$ and according to the series inductance characteristics of the positive sequence voltage source, and is used as the current instruction reference value $I_{sref}$.

In an embodiment, when the amplitude of the calculated current instruction reference value $I_{sref}$ is greater than the current limiting value $I_{max}$ of the converter, namely, Formula (4) is satisfied, it is determined that the converter is in the instruction current-limiting mode:

$$\sqrt{I_{srefdp}^2 + I_{srefqp}^2} + \sqrt{I_{srefdn}^2 + I_{srefqn}^2} > I_{max} \quad (4)$$

where $I_{srefdp}$ is a current positive sequence axis-d reference value of the current instruction reference value $I_{sref}$, $I_{srefqp}$ is a current positive sequence axis-q reference value of the current instruction reference value $I_{sref}$, $I_{srefdn}$ is a current negative sequence axis-d reference value of the current instruction reference value $I_{sref}$, and $I_{srefqn}$ is a current negative sequence axis-q reference value of the current instruction reference value $I_{sref}$.

In an embodiment, when the calculated current-limiting impedance $X_L$ is greater than the constant impedance value $X_{Lset}$, it is determined that the converter is in the instruction current-limiting mode.

Step S207: Control, according to the current instruction reference value $I_{sref}$, a current of the converter to follow the current instruction reference value $I_{sref}$.

The controlling a current of the converter to follow the current instruction reference value $I_{sref}$ means that when the current instruction reference value $I_{sref}$ increases, the current of the converter may be controlled to increase; and when the current instruction reference value $I_{sref}$ decreases, the current of the converter may be controlled to decrease.

In an embodiment, a reference voltage instruction is obtained with the current instruction reference value $I_{sref}$ and the grid-side current $I_s$. For example, a reference voltage instruction is obtained with a PI controller and with the current instruction reference value $I_{sref}$ and the grid-side current $I_s$.

In an embodiment, inverse Park (dq/abc) transformation is performed on the reference voltage instruction to obtain a three-phase reference voltage instruction $U_{Cabc}$, and $U_{Cabc}$ is sent to a subsequent converter valve control link to control the converter.

In an embodiment, a current-limiting method for performing current limiting according to series inductance characteristics of a positive sequence voltage source is provided, to avoid a problem in a conventional current-limiting method that a converter is caused to enter a current source and consequently control characteristics are insufficient. Additionally, in an embodiment, external characteristics of the control system in stable and transient whole processes are series controlled inductance characteristics of the positive sequence voltage source, thereby providing inertia support for the grid consistent with that for the synchronous generator in a fault.

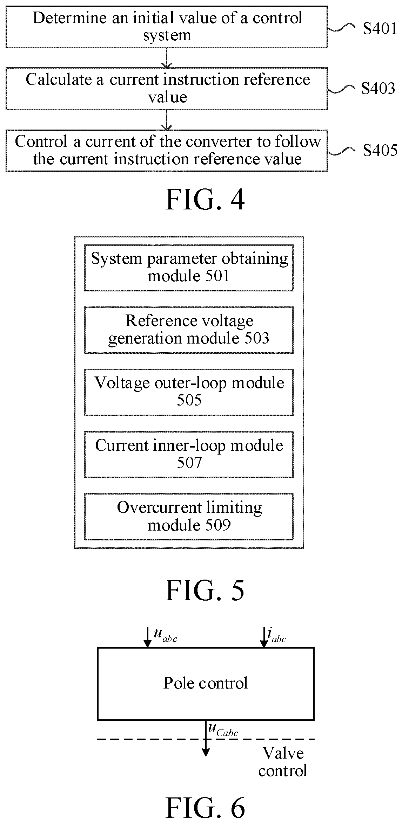

FIG. 4 is a flowchart of a control method for a converter according to an exemplary embodiment of this application. A control method for a converter according to an exemplary embodiment of this application is described in detail below with reference to FIG. 4.

Step S401: Determine an inner potential amplitude E of the converter, a phase $\theta$ of the inner potential, a grid-side voltage $U_s$, a grid-side current $I_s$ of the converter, a constant impedance value $X_{Lset}$, and a current limiting value $I_{max}$ of the converter.

In an embodiment, a value of the inner potential amplitude E of the converter ranges from 0 pu to 2 pu. For example, a value of the inner potential amplitude E of the converter is 1 pu. In an embodiment, the value of E may alternatively be adjusted by adding an exciter similar to a synchronous generator or a reactive regulation policy.

In an embodiment, a rotor motion equation of a virtual synchronous generator of the phase $\theta$ is shown in Formula (2).

In an embodiment, the constant impedance value $X_{Lset}$ ranges from 0 pu to 5 pu. For example, the constant impedance value $X_{Lset}$ is 0.1 pu.

Step S403: Calculate a current instruction reference value $I_{sref}$ in an instruction current-limiting mode according to series inductance characteristics of a positive sequence voltage source and according to the grid-side voltage $U_s$, the inner potential amplitude E, the phase $\theta$, and the current limiting value $I_{max}$.

In an embodiment, Park transformation is performed on the grid-side voltage $U_s$ according to the phase $\theta$, and a positive sequence axis-d component $U_{sdp}$ of the grid-side voltage $U_s$, a positive sequence axis-q component $U_{sqp}$ of the grid-side voltage $U_s$, a negative sequence axis-d component $U_{sdn}$ of the grid-side voltage $U_s$, and a negative sequence axis-q component $U_{sqn}$ of the grid-side voltage $U_s$ are calculated.

In an embodiment, a current-limiting impedance $X_L$ in the instruction current-limiting mode is calculated according to the current limiting value $I_{max}$. For example, a voltage vector $U_L$ of the current-limiting impedance is calculated according to a vector difference between the grid-side voltage $U_s$ and the inner potential amplitude E, and then the current-limiting impedance $X_L$ is obtained by dividing a modulus of $U_L$ by the current limiting value $I_{max}$ of the converter.

In an embodiment, the current instruction reference value $I_{sref}$ after instruction limiting is calculated according to the series inductance characteristics of the positive sequence voltage source. The current instruction reference value $I_{sref}$ includes a current positive sequence axis-d reference value $I_{srefdp}$, a current positive sequence axis-q reference value $I_{srefqp}$, a current negative sequence axis-d reference value $I_{srefdn}$, and a current negative sequence axis-q reference value $I_{srefqn}$. For example, a current vector on the current-limiting impedance $X_L$ is calculated according to the voltage vector $U_L$ of the current-limiting impedance and the current-limiting impedance $X_L$, and is used as the current instruction reference value $I_{sref}$, which includes a current positive sequence axis-d reference value $I_{srefdp}$, a current positive sequence axis-q reference value $I_{srefqp}$, a current negative sequence axis-d reference value $I_{srefdn}$, and a current negative sequence axis-q reference value $I_{srefqn}$.

S405: Control, according to the current instruction reference value $I_{sref}$, a current of the converter to follow the current instruction reference value $I_{sref}$.

The controlling a current of the converter to follow the current instruction reference value $I_{sref}$ means that when the current instruction reference value $I_{sref}$ increases, the current of the converter may be controlled to increase; and when the current instruction reference value $I_{sref}$ decreases, the current of the converter may be controlled to decrease.

In an embodiment, a reference voltage instruction is obtained with the current instruction reference value $I_{sref}$ and the grid-side current $I_s$. For example, a reference voltage instruction is obtained with a PI controller and with the current instruction reference value $I_{sref}$ and the grid-side current $I_s$.

In an embodiment, inverse Park (dq/abc) transformation is performed on the reference voltage instruction to obtain a three-phase reference voltage instruction $U_{Cabc}$, and $U_{Cabc}$ is sent to a subsequent converter valve control link to control the converter.

FIG. 5 is a block diagram of a control system for a converter according to an exemplary embodiment of this application.

A control system for a converter according to an exemplary embodiment of this application is described in detail below with reference to FIG. 5.

The control system includes a system parameter obtaining module 501, a reference voltage generation module 503, a voltage outer-loop module 505, a current inner-loop module 507, and an overcurrent limiting module 509.

The system parameter obtaining module 501 is configured to obtain an inner potential amplitude E of the converter, a phase θ of the inner potential, a constant impedance value $X_{Lset}$, a grid-side voltage $U_s$, a grid-side current $I_s$ of the converter, and a current limiting value $I_{max}$.

In an embodiment, a value of an amplitude of the inner potential of the converter ranges from 0 pu to 2 pu, and a rotor motion equation of a virtual synchronous generator of the phase θ of the converter is:

$$\begin{cases} \dfrac{d\theta}{dt} = \omega \\ J\dfrac{d\omega}{dt} = \dfrac{P_m}{\omega} - \dfrac{P_e}{\omega} - D(\omega - \omega_0) \end{cases}$$

The reference voltage generation module 503 is configured to calculate a voltage reference value $U_{sref}$ of a connection bus of the converter according to the inner potential amplitude E, the phase θ, the constant impedance value $X_{Lset}$, and the grid-side current $I_s$ of the converter;

the voltage outer-loop module 505 is configured to calculate a current instruction reference value $I_{sref}$ according to an error between the voltage reference value $U_{sref}$ of the connection bus and the collected grid-side voltage $U_s$;

the current inner-loop module 507 is configured to control, according to the current instruction reference value $I_{sref}$, a current of the converter to follow the current instruction reference value $I_{sref}$; and

the overcurrent limiting module 509 is configured to calculate, when the current instruction reference value $I_{sref}$ of the converter is greater than the current limiting value $I_{max}$ or an actual current is greater than the current limiting value $I_{max}$ of the converter, a current instruction reference value $I_{sref}$ in an instruction current-limiting mode according to the collected grid-side voltage $U_s$, the inner potential amplitude E, the phase θ, and the current limiting value $I_{max}$ of the converter and according to the series inductance characteristics of the positive sequence voltage source, where the current instruction reference value $I_{sref}$ is used as input of the current inner-loop module.

FIG. 6 shows a control system for a converter according to an embodiment of this application. In this embodiment, the control system performs inverse Park (dq/abc) transformation on the reference voltage instruction that is output by the current inner-loop module 4 to obtain a three-phase reference voltage instruction $U_{Cabc}$, and sends $U_{Cabc}$ to subsequent valve control (namely, converter valve control link) to control the converter.

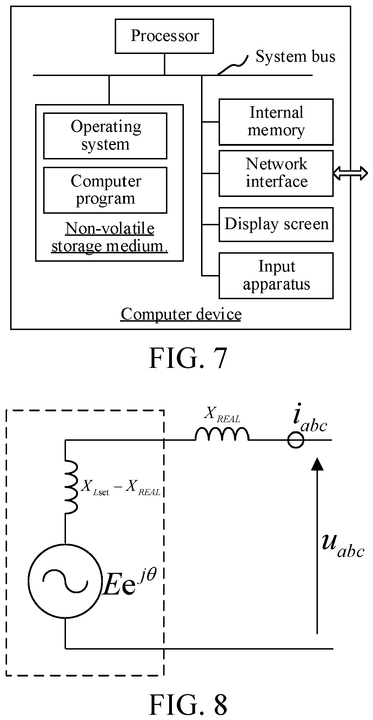

FIG. 7 shows a computer device according to an embodiment of this application. The computer device shown in FIG. 7 includes a memory, a processor, and a computer program stored in the memory and executable on the processor. When the processor shown in FIG. 7 executes the computer program, control logics shown in FIG. 2 and FIG. 4 that are specifically steps S201 to S 107 and steps S401 to S405 are implemented.

It may be understood that the implemented steps of the control method are not limited to the foregoing exemplary embodiments, but additional and optional other operations /steps may be, for example, further implemented. In addition, some operations/steps may be further divided, while some operations/steps may be combined or partially combined. Therefore, an actual execution order may vary depending on an actual situation.

It may be understood that the computer device may be a terminal, and a diagram of an internal structure thereof may be shown in FIG. 7. The computer device may include a processor, a memory, a network interface, a display screen, and an input apparatus that are connected by using a system bus. The processor of the computer device is configured to provide computing and control capabilities. The memory of the computer device includes a non-volatile storage medium and an internal memory. The non-volatile storage medium stores an operating system and a computer program. The internal memory provides an environment for running of the operating system and the computer program in the non-volatile storage medium. The computer device may include a network interface. The network interface is configured to connect to and communicate with an external terminal by using a network. The computer program is executed by the processor to implement the foregoing control method for a converter. The computer device may further include a display screen. The display screen may be a liquid crystal display screen or an electronic ink display screen. The input apparatus of the computer device may be a touch layer covering the display screen, or may be a key, a trackball, or a touch pad disposed on a housing of the computer device, or may be an external keyboard, a touch pad, a mouse, or the like.

A person skilled in the art may understand that, the structure shown in FIG. 7 is only a block diagram of a part of a structure related to a solution of this application and does not limit the computer device to which the solution of this application is applied. Specifically, the computer device may include more or fewer members than those in the drawings, or include a combination of some members, or include different member layouts.

Exemplary embodiments of this application further provide a computer-readable storage medium, storing a computer program, where steps of the control method for a converter provided in the embodiments of this application are implemented when the computer program is executed by a processor. It may be understood that the implemented steps of the control method are not limited to the foregoing exemplary embodiments, but additional and optional other operations /steps may be, for example, further implemented. In addition, some operations/steps may be further divided, while some operations/steps may be combined or partially combined. Therefore, an actual execution order may vary depending on an actual situation.

FIG. 8 is a diagram of an equivalent circuit of controlling a converter with a control method for a converter according to an embodiment of this application. $X_{REAL}$ is an impedance actually existing in a system, $X_{Lset}$-$X_{REAL}$ is an impedance obtained through the foregoing control method for a converter, and $Ee^{j\theta}$ is a positive sequence voltage source. Therefore, by using the foregoing control method for a converter, the converter presents characteristics of the series inductance $X_{Lset}$ of the positive sequence voltage source $Ee^{j\theta}$.

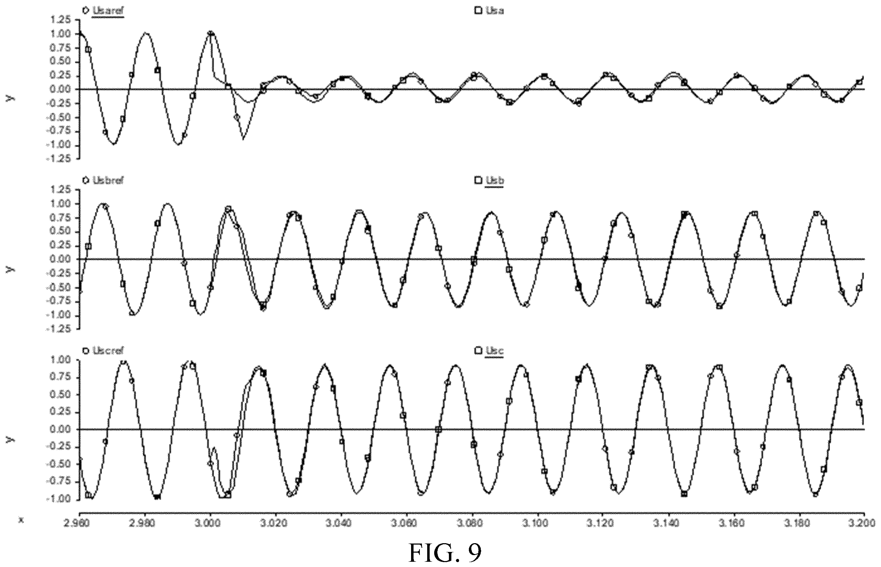

FIG. 9 shows a fault ride-through effect of a control method for a converter according to an embodiment of this application. $U_{saref}$, $U_{sbref}$, and $U_{scref}$ are voltage reference values of a three-phase connection bus that are calculated according to Formula (3), and $U_{sa}$, $U_{sb}$, and $U_{sc}$ are sampling voltage of the three-phase connection bus. It may be learned from FIG. 9 that, a single-phase grounding fault occurs at a moment 3s, the voltages of the three-phase bus temporarily deviate from an instruction value. Subsequently, each of the voltages of the three-phase bus can be maintained to follow the instruction value. Therefore, after temporarily losing voltage source control characteristics, the converter shown in FIG. 9 can quickly return to a voltage source control state.

A novel current-limiting method in which current limiting is performed according to series inductance characteristics of a positive sequence voltage source is provided according to exemplary embodiments provided in this application, to avoid a problem in a conventional current-limiting method that a converter is caused to enter a current source and consequently control characteristics are insufficient.

A control system for a converter provided according to exemplary embodiments of this application can have external characteristics that are series controlled inductance characteristics of a positive sequence voltage source in stable and transient whole processes, and can provide inertia support for the grid consistent with that for the synchronous generator in a fault. In addition, in a fault, a capacitive reactive current may be injected into a fault point, to facilitate an increase in protection of action sensitivity.

The embodiments of this application are described in detail above. The principle and implementations of this application are described herein through specific examples. The description about the embodiments of the present invention is merely provided to help understand the method and core ideas of this application. In addition, all changes or variations made by a person skilled in the art based on the specific implementations and application scopes of this application and according to the idea of this application fall within the protection scope of this application. In conclusion, content of this specification should not be understood as a limitation of this application.

**Claims**

1. A control method for a converter, wherein the control method is applied to a flexible direct-current power transmission system, the flexible direct-current power transmission system comprises one or more voltage source converters, and the control method comprises:

    step 1: determining an inner potential amplitude E of the converter, a phase $\theta$ of the inner potential, a grid-side voltage $U_s$, a grid-side current $I_s$ of the converter, a constant impedance value $X_{Lset}$, and a current limiting value $I_{max}$ of the converter;
    step 2: calculating a voltage reference value $U_{sref}$ of a connection bus of the converter according to the inner potential amplitude E, the phase $\theta$, the constant impedance value $X_{Lset}$, and the grid-side current $I_s$ of the converter;
    step 3: calculating a current instruction reference value $I_{sref}$ according to an error between the voltage reference value $U_{sref}$ of the connection bus and the grid-side voltage $U_s$; and
    step 4: controlling, according to the current instruction reference value $I_{sref}$, a current of the converter to follow the current instruction reference value $I_{sref}$,
    wherein the control method further comprises an overcurrent limiting unit, and when the converter is in an instruction current-limiting mode, a current instruction reference value in the instruction current-limiting mode is calculated according to series inductance characteristics of a positive sequence voltage source and according to the grid-side voltage $U_s$, the inner potential amplitude E, the phase $\theta$, and the current limiting value $I_{max}$ of the converter, and is used as the current instruction reference value $I_{sref}$ in the step 3.

2. The control method according to claim 1, wherein

    a value of an amplitude of the inner potential of the converter ranges from 0 pu to 2 pu; and
    a rotor motion equation of a virtual synchronous generator of the phase $\theta$ is:

$$\begin{cases} \dfrac{d\theta}{dt} = \omega \\ J\dfrac{d\omega}{dt} = \dfrac{P_m}{\omega} - \dfrac{P_e}{\omega} - D(\omega - \omega_0) \end{cases},$$

    wherein $P_m$ is mechanical power, $P_e$ is electromagnetic power, J is virtual inertia, D is a virtual damping factor, $\omega$ is a rotor angular frequency of the virtual synchronous generator, and $\omega_0$ is a system rated rotor angular frequency.

3. The control method according to claim 2, wherein the amplitude of the inner potential of the converter is obtained by performing calculation according to determined function relationships such as droop characteristics and based on a terminal voltage or reactive power.

4. The control method according to claim 1, wherein

    the voltage reference value $U_{sref}$ comprises a positive sequence axis-d component $U_{srefdp}$, a positive sequence axis-q component $U_{srefqp}$, a negative sequence axis-d component $U_{srefdn}$, and a negative sequence axis-q component $U_{srefqn}$, and satisfies:

$$U_{srefdp} + j\, U_{srefqp} = E - jX_{Lset}(I_{sdp} + \mathrm{j}I_{sqp})$$

$$U_{srefdn} + j\, U_{srefqn} = jX_{Lset}(I_{sdn} + \mathrm{j}I_{sqn})$$

wherein $I_{sdp}$ is a positive sequence axis-d component of the grid-side current $I_s$ of the converter, $I_{sqp}$ is a positive sequence axis-q component of the grid-side current $I_s$ of the converter, $I_{sdn}$ is a negative sequence axis-d component of the grid-side current $I_s$ of the converter, and $I_{sqn}$ is a negative sequence axis-q component of the grid-side current $I_s$ of the converter.

5. The control method according to claim 1, wherein the control method further comprises:

when an amplitude of the current instruction reference value $I_{sref}$ calculated in the step 3 is greater than the current limiting value $I_{max}$, namely, the following formula is satisfied, the converter is in the instruction current-limiting mode:

$$\sqrt{I_{srefdp}^2 + I_{srefqp}^2} + \sqrt{I_{srefdn}^2 + I_{srefqn}^2} > I_{max}$$

wherein $I_{srefdp}$ is a current positive sequence axis-d reference value of the current instruction reference value $I_{sref}$, $I_{srefqp}$ is a current positive sequence axis-q reference value of the current instruction reference value $I_{sref}$, $I_{srefdn}$ is a current negative sequence axis-d reference value of the current instruction reference value $I_{sref}$, and $I_{srefqn}$ is a current negative sequence axis-q reference value of the current instruction reference value $I_{sref}$.

6. The control method according to claim 1, wherein the control method further comprises: when an actual current is greater than the current limiting value $I_{max}$, the converter is in the instruction current-limiting mode.

7. The control method according to claim 1, wherein the step of calculating the current instruction reference value in the instruction current-limiting mode according to the series inductance characteristics of the positive sequence voltage source comprises:

performing Park transformation on the grid-side voltage $U_s$ according to the phase $\theta$, to calculate a voltage vector comprising a positive sequence axis-d component $U_{sdp}$ of the grid-side voltage $U_s$, a positive sequence axis-q component $U_{sqp}$ of the grid-side voltage $U_s$, a negative sequence axis-d component $U_{sdn}$ of the grid-side voltage $U_s$, and a negative sequence axis-q component $U_{sqn}$ of the grid-side voltage $U_s$;
calculating a current-limiting impedance $X_L$ in the instruction current-limiting mode according to the current limiting value $I_{max}$; and
calculating, based on the series inductance characteristics of the positive sequence voltage source, the current instruction reference value $I_{sref}$ after instruction limiting according to the voltage vector of the grid-side voltage $U_s$, the inner potential amplitude E, and the current-limiting impedance $X_L$, wherein the current instruction reference value $I_{sref}$ comprises a current positive sequence axis-d reference value $I_{srefdp}$, a current positive sequence axis-q reference value $I_{srefqp}$, a current negative sequence axis-d reference value $I_{srefdn}$, and a current negative sequence axis-q reference value $I_{srefqn}$.

8. The control method according to claim 7, wherein when the converter is in the instruction current-limiting mode, the constant impedance value $X_{Lset}$ is the current-limiting impedance $X_L$; and
when the converter is not in the instruction current-limiting mode, the constant impedance value $X_{Lset}$ ranges from 0 pu to 5 pu.

9. The control method according to claim 7, wherein the step of calculating the current-limiting impedance $X_L$ in the instruction current-limiting mode according to the current limiting value $I_{max}$ comprises:
calculating a voltage vector of the current-limiting impedance $X_L$ according to a vector difference between the grid-side voltage $U_s$ and the inner potential amplitude E, and then obtaining the current-limiting impedance $X_L$ by dividing a modulus of the voltage vector by the current limiting value $I_{max}$ of the converter.

10. The control method according to any one of claims 7 to 9, wherein when the current-limiting impedance $X_L$ is greater than the constant impedance value $X_{Lset}$, it is determined that the converter is in the instruction current-limiting mode.

**11.** The control method according to claim 1, wherein the step of calculating the current instruction reference value $I_{sref}$ according to the error between the voltage reference value $U_{sref}$ of the connection bus and the grid-side voltage $U_s$ comprises:
using a PI controller in the step 3, wherein input is the error between the voltage reference value $U_{sref}$ of the connection bus and the grid-side voltage $U_s$, output is the current instruction reference value $I_{sref}$, and when the converter is in the instruction current-limiting mode, the current instruction reference value $I_{sref}$ is the current instruction reference value that is output in the overcurrent limiting unit.

**12.** The control method according to claim 1, wherein a PI controller is used in the step 3, a reference voltage instruction is obtained using the current instruction reference value $I_{sref}$ and the grid-side current $I_s$ of the converter, inverse Park transformation is performed on the reference voltage instruction to obtain a three-phase reference voltage instruction $U_{Cabc}$, and the three-phase reference voltage instruction $U_{Cabc}$ is sent to a subsequent converter valve control link to control the converter.

**13.** A control method for a converter, wherein the control method is applied to a flexible direct-current power transmission system, the flexible direct-current power transmission system comprises one or more voltage source converters, and the control method comprises:

determining an inner potential amplitude E of the converter, a phase $\theta$ of the inner potential, a grid-side voltage $U_s$, a grid-side current $I_s$ of the converter, a constant impedance value $X_{Lset}$, and a current limiting value $I_{max}$ of the converter;
calculating a current instruction reference value $I_{sref}$ in an instruction current-limiting mode according to series inductance characteristics of a positive sequence voltage source and according to the grid-side voltage $U_s$, the inner potential amplitude E, the phase $\theta$, and the current limiting value $I_{max}$; and
controlling, according to the current instruction reference value $I_{sref}$, a current of the converter to follow the current instruction reference value $I_{sref}$.

**14.** The control method according to claim 13, wherein

a value of an amplitude of the inner potential of the converter ranges from 0 pu to 2 pu, and a rotor motion equation of a virtual synchronous generator of the phase $\theta$ is:

$$\begin{cases} \dfrac{d\theta}{dt}=\omega \\ J\dfrac{d\omega}{dt} = \dfrac{P_m}{\omega} - \dfrac{P_e}{\omega} - D(\omega - \omega_0) \end{cases}$$

wherein $P_m$ is mechanical power, $P_e$ is electromagnetic power, J is virtual inertia, D is a virtual damping factor, $\omega$ is a rotor angular frequency of the virtual synchronous generator, and $\omega_0$ is a system rated rotor angular frequency.

**15.** The control method according to claim 14, wherein the amplitude of the inner potential of the converter is obtained by performing calculation according to determined function relationships such as droop characteristics and based on a terminal voltage or reactive power.

**16.** The control method according to claim 14, wherein the step of calculating the current instruction reference value $I_{sref}$ in the instruction current-limiting mode according to the series inductance characteristics of the positive sequence voltage source comprises:

performing Park transformation on the grid-side voltage $U_s$ according to the phase $\theta$, to calculate a voltage vector comprising a positive sequence axis-d component $U_{sdp}$ of the grid-side voltage $U_s$, a positive sequence axis-q component $U_{sqp}$ of the grid-side voltage $U_s$, a negative sequence axis-d component $U_{sdn}$ of the grid-side voltage $U_s$, and a negative sequence axis-q component $U_{sqn}$ of the grid-side voltage $U_s$;
calculating a current-limiting impedance $X_L$ in the instruction current-limiting mode according to the current

limiting value $I_{max}$; and

calculating, based on the series inductance characteristics of the positive sequence voltage source, the current instruction reference value $I_{sref}$ after instruction limiting according to the voltage vector of the grid-side voltage $U_s$, the inner potential amplitude E, and the current-limiting impedance $X_L$, wherein the current instruction reference value $I_{sref}$ comprises a current positive sequence axis-d reference value $I_{srefdp}$, a current positive sequence axis-q reference value $I_{srefqp}$, a current negative sequence axis-d reference value $I_{srefdn}$, and a current negative sequence axis-q reference value $I_{srefqn}$.

17. The control method according to claim 16, wherein calculating a voltage vector of the current-limiting impedance $X_L$ according to a vector difference between the grid-side voltage $U_s$ and the inner potential amplitude E, and then obtaining the current-limiting impedance $X_L$ by dividing a modulus of the voltage vector by the current limiting value $I_{max}$ of the converter.

18. A control system for a converter, wherein

the control system comprises a system parameter obtaining module, a reference voltage generation module, a voltage outer-loop module, a current inner-loop module, and an overcurrent limiting module, wherein the system parameter obtaining module is configured to obtain an inner potential amplitude E of the converter, a phase $\theta$ of the inner potential, a constant impedance value $X_{Lset}$, a grid-side voltage $U_s$, a grid-side current $I_s$ of the converter, and a current limiting value $I_{max}$, wherein a value of an amplitude of the inner potential amplitude E ranges from 0 pu to 2 pu, and a rotor motion equation of a virtual synchronous generator of the phase $\theta$ is:

$$\begin{cases} \dfrac{d\theta}{dt} = \omega \\ J\dfrac{d\omega}{dt} = \dfrac{P_{\mathrm{m}}}{\omega} - \dfrac{P_e}{\omega} - D(\omega - \omega_0) \end{cases}$$

the reference voltage generation module is configured to calculate a voltage reference value $U_{sref}$ of a connection bus of the converter according to the inner potential amplitude E, the phase $\theta$, the constant impedance value $X_{Lset}$, and the grid-side current $I_s$ of the converter;

the voltage outer-loop module is configured to calculate a current instruction reference value $I_{sref}$ according to an error between the voltage reference value $U_{sref}$ of the connection bus and the collected grid-side voltage $U_s$;

the current inner-loop module is configured to control, according to the current instruction reference value $I_{sref}$, a current of the converter to follow the current instruction reference value $I_{sref}$, and

the overcurrent limiting module is configured to calculate, when the current instruction reference value $I_{sref}$ of the converter is greater than the current limiting value $I_{max}$ or an actual current is greater than the current limiting value $I_{max}$ of the converter, a current instruction reference value $I_{sref}$ in an instruction current-limiting mode according to the collected grid-side voltage $U_s$, the inner potential amplitude E, the phase $\theta$, and the current limiting value $I_{max}$ of the converter and according to the series inductance characteristics of the positive sequence voltage source, wherein the current instruction reference value $I_{sref}$ is used as input of the current inner-loop module.

19. A computer device, comprising a memory, a processor, and a computer program stored in the memory and executable on the processor, wherein when the processor executes the computer program, the steps in the control method according to any one of claims 1 to 17 are implemented.

20. A computer-readable storage medium, storing a computer program, wherein when the computer program is executed by a processor, the steps in the method according to any one of claims 1 to 17 are implemented.

Current-limiting
mode

$I_{max}$

$u_{dqpn}$

$X_{L0}$ $X_{Lset}$

Overcurrent limiting
module

Selector

5

$X_L$

$i_{dqpn}^{ref1}$

Current-
limiting
mode

System parameter
obtaining module

1

Reference voltage
generation module

Voltage outer-loop
module

Selector

$i_{dqpn}^{ref}$

$\theta$

$u_{Cabc}$

Current inner-loop
module

dq/abc

$E$

$u_{dqpn}^{ref}$

$i_{dqpn}^{ref2}$

4

$\theta$

2

3

$X_{Lset}$ $i_{dqpn}$

$u_{dqpn}$

$i_{dqpn}$

**FIG. 1**

| Determine an initial value of a control system | S201 |
|---|---|

| Calculate a voltage reference value | S203 |
|---|---|

| Calculate a current instruction reference value | S205 |
|---|---|

| Control a current of the converter to follow the current instruction reference value | S207 |
|---|---|

**FIG. 2**

$P_m$ $+$ $-$ $\div$ $1/Js+D$ $\Delta\omega$ $\omega_0$ $1/s$ $\theta$

$P_e$ $\omega$

**FIG. 3**

Determine an initial value of a control system ⟋ S401

Calculate a current instruction reference value ⟋ S403

Control a current of the converter to follow the current instruction reference value ⟋ S405

## FIG. 4

System parameter obtaining module 501

Reference voltage generation module 503

Voltage outer-loop module 505

Current inner-loop module 507

Overcurrent limiting module 509

## FIG. 5

$\downarrow u_{abc}$   $\downarrow i_{abc}$

Pole control

$\downarrow u_{Cabc}$

Valve control

## FIG. 6

FIG. 7

FIG. 8

FIG. 9

## INTERNATIONAL SEARCH REPORT

| International application No. |
|---|
| **PCT/CN2022/107634** |

**A.    CLASSIFICATION OF SUBJECT MATTER**

H02J 3/16(2006.01)i;   H02J 3/18(2006.01)i

According to International Patent Classification (IPC) or to both national classification and IPC

**B.    FIELDS SEARCHED**

Minimum documentation searched (classification system followed by classification symbols)

    H02J

Documentation searched other than minimum documentation to the extent that such documents are included in the fields searched

Electronic data base consulted during the international search (name of data base and, where practicable, search terms used)

    CNTXT; ENTXT; ENTXTC; DWPI; CNKI: 柔性直流; 电压源; 电感; 电压; 电流; 相位; 阻抗; hvdc; voltage source; inductance; current; phase; impedance

**C.    DOCUMENTS CONSIDERED TO BE RELEVANT**

| Category* | Citation of document, with indication, where appropriate, of the relevant passages | Relevant to claim No. |
|---|---|---|
| A | CN 110137977 A (NR ELECTRIC CO., LTD. et al.) 16 August 2019 (2019-08-16) description, paragraphs 50-96, and figures 1-3 | 1-20 |
| A | CN 107017614 A (TBEA XINJIANG NEW ENERGY CO., LTD. et al.) 04 August 2017 (2017-08-04) entire document | 1-20 |
| A | CN 107123981 A (GLOBAL ENERGY INTERCONNECTION RESEARCH INSTITUTE et al.) 01 September 2017 (2017-09-01) entire document | 1-20 |
| A | CN 112886556 A (CHINA SOUTHERN POWER GRID CO., LTD. et al.) 01 June 2021 (2021-06-01) entire document | 1-20 |
| A | US 2011127838 A1 (MITSUBISHI ELECTRIC CORP.) 02 June 2011 (2011-06-02) entire document | 1-20 |

☑ Further documents are listed in the continuation of Box C.        ☑ See patent family annex.

| | |
|---|---|
| *    Special categories of cited documents: | "T"   later document published after the international filing date or priority date and not in conflict with the application but cited to understand the principle or theory underlying the invention |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
|---|---|
| **16 September 2022** | **29 September 2022** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

| International application No. |
|---|
| **PCT/CN2022/107634** |

**C.    DOCUMENTS CONSIDERED TO BE RELEVANT**

| Category* | Citation of document, with indication, where appropriate, of the relevant passages | Relevant to claim No. |
|---|---|---|
| A | 卢东斌等 (LU, Dongbin et al.). "电网换相换流器和电压源换流器串联组成的混合直流换流器控制和保护研究 (Control and protection of series hybrid DC converters with a line-commutated converter and a voltage source converter)"<br>电力系统保护与控制 (Power System Protection and Control),<br>Vol. 48, No. 15, 01 August 2020 (2020-08-01),<br>ISSN: 1674-3415,<br>     pp. 92-101 | 1-20 |

**INTERNATIONAL SEARCH REPORT**
Information on patent family members

International application No.

**PCT/CN2022/107634**

| Patent document cited in search report | | | Publication date (day/month/year) | Patent family member(s) | | | Publication date (day/month/year) |
|---|---|---|---|---|---|---|---|
| CN | 110137977 | A | 16 August 2019 | | None | | |
| CN | 107017614 | A | 04 August 2017 | CN | 107017614 | B | 20 September 2019 |
| CN | 107123981 | A | 01 September 2017 | WO | 2018176599 | A1 | 04 October 2018 |
| | | | | CN | 107123981 | B | 06 August 2021 |
| CN | 112886556 | A | 01 June 2021 | | None | | |
| US | 2011127838 | A1 | 02 June 2011 | JP | 2011114972 | A | 09 June 2011 |
| | | | | US | 8294432 | B2 | 23 October 2012 |
| | | | | JP | 4850279 | B2 | 11 January 2012 |

Form PCT/ISA/210 (patent family annex) (January 2015)

**REFERENCES CITED IN THE DESCRIPTION**

**Patent documents cited in the description**

- CN 2021108502453